# DEMANDE DE BREVET EUROPEEN

(11) **EP 2 636 606 A1**
(43) Date de publication de la demande: **11.09.2013**
(21) Numéro de dépôt: 13157552.4
(22) Date de dépôt: 04.03.2013
(51) Int. Cl.: B65B 69/00, B62B 3/08, B62B 3/10, B65G 65/23, B66F 9/02

(54) **Dispositif de prise, de manutention et de vidage d'un contenant souple**

(30) Priorité: 05.03.2012 FR 1251976
(71) Demandeur: Brunone, René, 27950 Saint Marcel (FR)
(72) Inventeur: Brunone, René, 27950 Saint Marcel (FR)
(74) Mandataire: Kohn, Philippe

(57) **Abrégé**

L'invention propose un dispositif (10) de prise, de manutention et de vidage d'un contenant souple (12) de matériau muni d'une ouverture supérieure, notamment un sac (12) de grande capacité dit "big-bag", qui comporte au moins :
- un moyen (18) de réception dudit contenant (12),
- un chariot (20), porteur dudit moyen (18) de réception,
- un moyen de levage (22), interposé entre ledit chariot (20) et ledit moyen (18) de réception, qui est notamment destiné à permettre le prélèvement du contenant (12) sur toute surface pour son transfert vers une position de transport sur le chariot (20),
caractérisé en ce que le chariot (20) comporte :
- une trémie (30) comportant un orifice (32) d'entrée adaptable sur l'ouverture (14) du contenant (12), un orifice (34) de sortie, et une vanne permettant d'interrompre l'écoulement du contenu du contenant au travers de la trémie,
- un moyen (36) de retournement du moyen de réception (18), qui est destiné à permettre le retournement du contenant (12) et son vidage au travers de la trémie (30).

## Description

L'invention concerne un dispositif de prise, de manutention et de vidage d'un contenant.

L'invention concerne plus particulièrement un dispositif de prise, de manutention et de vidage d'un contenant souple de matériau muni d'une ouverture supérieure, notamment un sac de grande capacité dit "big-bag", qui comporte au moins :
- un moyen de réception dudit contenant,
- un chariot, porteur dudit moyen de réception,
- un moyen de levage, interposé entre ledit chariot et ledit moyen de réception, qui est notamment destiné à permettre le prélèvement du contenant sur toute surface pour son transfert vers une position de transport sur le chariot,

Conventionnellement, la manipulation d'un contenant souple de type big-bag, qui comporte habituellement des poignées à la manière d'un sac ordinaire, est effectuée à l'aide d'une grue ou d'un treuil. On utilise pour cela des élingues qui sont été préalablement glissées dans les poignées du big-bag puis soulevées par le treuil ou la grue. Les élingues permettent de soulever le big-bag qui peut alors être déplacé d'un endroit à un autre.

Plus récemment, il a été proposé de déplacer ledit big-bag à l'aide de chariots à roues ou à roulettes, qui comportent une armature ou cadre apte à recevoir un big-bag et munie de moyens de fixation des poignées du big-bag. Certains de ces chariots intègrent éventuellement des moyens de levage de l'armature pour lever ledit big-bag.

Toutefois, aucune solution technique n'a jusqu'ici été envisagée pour simplifier l'opération de vidage des big-bags.

Conventionnellement le vidage d'un big-bag est effectué en le déposant sur le sol ou un autre support, puis en le renversant afin de le vider de son contenu. En variante, il peut aussi être vidé manuellement.

De ce fait, les opérations de vidage d'un big-bag sont longues et conduisent à une dispersion d'une partie de son contenu.

L'invention remédie à cet inconvénient en proposant un dispositif permettant un vidage rapide du big-bag sans dispersion de son contenu.

Dans ce but, l'invention propose un dispositif du type décrit précédemment, **caractérisé en ce que** le chariot comporte :
- une trémie comportant un orifice d'entrée adaptable sur l'ouverture de sortie du contenant et un orifice de sortie,
- un moyen de retournement du moyen de réception, qui est destiné à permettre le retournement du contenant et son vidage au travers de la trémie.

Selon d'autres caractéristiques de l'invention :
- la trémie comporte une vanne permettant d'interrompre l'écoulement du contenu du contenant au travers de ladite trémie,
- le moyen de réception du contenant comporte une hotte ouverte longitudinalement comportant deux joues planes parallèles longitudinales qui sont reliées par une paroi transversale de fond, qui sont écartées d'une distance correspondant sensiblement à l'encombrement du contenant, et qui sont destinées à être glissées de part et d'autre du contenant puis à recevoir au moins un moyen de préhension solidaire du contenant, notamment des poignées transversalement opposées d'un big-bag,
- les joues planes longitudinales et la paroi transversale de la hotte sont bordées par des poutres longitudinales et une poutre transversale de renfort correspondantes,
- l'orifice d'entrée de la trémie coïncide avec des bords supérieurs des joues planes et de la paroi transversale de la hotte.
- le chariot comporte deux longerons longitudinaux munis à leurs extrémités de roues, qui sont reliés par au moins une traverse transversale avec laquelle ils délimitent une portion de cadre ouvert en "U" susceptible d'être glissé de part et d'autre d'un contenant, et à partir desquels s'étendent deux potences verticales qui portent le moyen de réception du contenant par l'intermédiaire du moyen de levage,
- le moyen de levage comporte deux bras dont chacun comporte :
   - une première extrémité qui est montée pivotante par l'intermédiaire d'un premier pivot à l'extrémité d'une potence verticale associée,
   - une seconde extrémité qui est montée pivotante par l'intermédiaire d'un deuxième pivot sur une partie intermédiaire de la poutre longitudinale associée de renfort de la hotte,
   - une partie intermédiaire qui est accouplée par l'intermédiaire d'un troisième pivot à l'extrémité d'une tige d'un vérin dont le corps est solidaire du chariot,
- le moyen de retournement du moyen de réception comporte un moyen de blocage du premier pivot des bras du moyen de levage et des vérins dudit moyen de levage dont la course permet le retournement de la trémie à sensiblement 180°,
- les vérins sont des vérins hydrauliques.

D'autres caractéristiques et avantages de l'invention apparaîtront à la lecture de la description détaillée qui suit pour la compréhension de laquelle on se reportera aux dessins annexés dans lesquels :
- les figures 1 et 2 illustrent la mise en oeuvre du dispositif selon l'invention pour la préhension d'un big-bag à l'arrière d'un camion ;
- les figures 3 et 4 illustrent la mise en oeuvre du dispositif selon l'invention pour la préhension d'un big-bag sur le sol ;
- la figure 5 illustre la mise en oeuvre du dispositif selon l'invention pour le retournement d'un big-bag ;
- la figure 6 illustre la mise en oeuvre du dispositif selon l'invention pour le vidage d'un big-bag.

On a représenté sur les figures un dispositif 10 de prise, de manutention et de vidage d'un contenant 12 souple de matériau, notamment un sac de grande capacité dit "big-bag".

De manière connue, un sac 12 de type big-bag est muni d'une ouverture supérieure 14 par laquelle sont introduits les matériaux à transporter, et il comporte généralement une paire 16 de poignées permettant son levage et/ou son accrochage.

La suite de la présente description fera référence à un dispositif 10 de prise spécialement adapté à un tel sac 12 de type big-bag, mais il sera compris qu'il trouverait à s'appliquer à n'importe quel contenant souple du marché muni de moyens d'accrochage et/ou de levage.

De manière connue, le dispositif 10 comporte au moins un moyen 18 de réception dudit contenant. Le dispositif 10 comporte aussi un chariot 20, porteur dudit moyen 18 de réception et un moyen de levage 22, qui interposé entre ledit chariot 20 et ledit moyen 18.

Le moyen de levage 22 est notamment destiné à permettre le prélèvement du contenant 12 sur toute surface pour son transfert vers une position de transport sur le chariot 20.

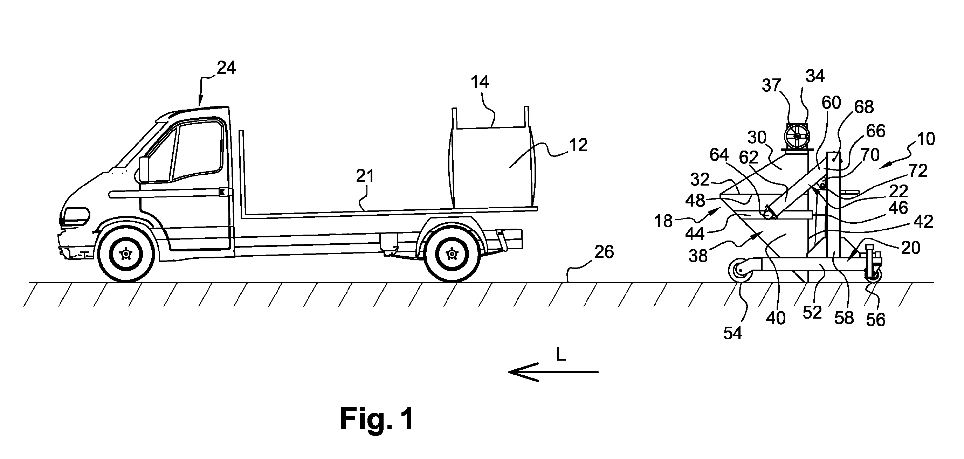

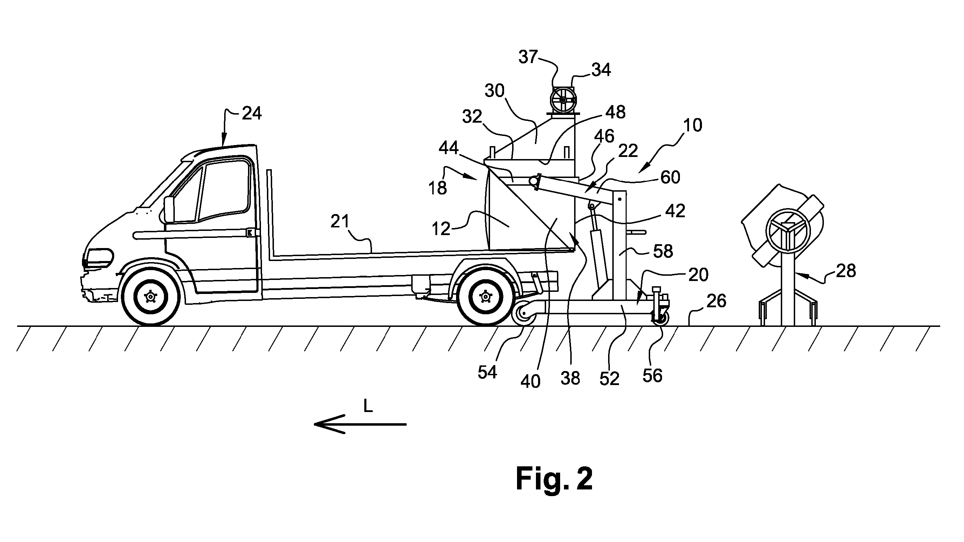

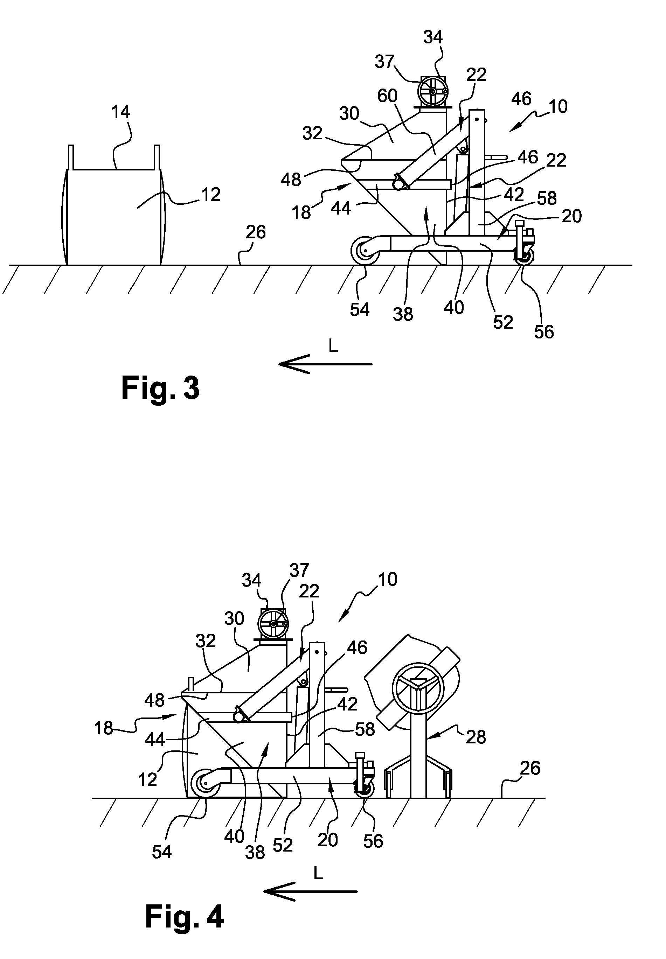

Ainsi par exemple, comme l'illustre la figure 1, le moyen de levage 22 permet de lever le moyen 18 de réception à hauteur d'un big-bag 12 reposant sur un plateau 21 d'un camion 24, pour en assurer la préhension, comme représenté à la figure 2. En variante, le moyen 22 de levage permet au moyen de réception 18 d'assurer la préhension d'un big-bag 12 reposant sur un sol 26 tel que représenté à la figure 3, puis de le surélever légèrement au-dessus d'un niveau du sol 26, pour permettre le déplacement du chariot 20 sur le sol 26, par exemple pour approcher le big-bag 12 d'une bétonnière 28, comme représenté à la figure 4.

Un problème se posait jusqu'à présent aux utilisateurs de big-bags 12 lorsqu'il s'agissait de les vider, par exemple pour en vider le contenu dans une bétonnière 28 comme représenté à la figure 4.

Les utilisateurs n'avaient généralement d'autre solution que de vider le big-bag à la pelle, rendant ainsi cette opération longue et fastidieuse.

L'invention remédie à cet inconvénient en proposant des moyens de retournement du contenant ou big-bag 12, qui permettent son vidage de manière aisée.

A cet effet, conformément à l'invention, le chariot 20 comporte :
- une trémie 30, comportant un orifice 32 d'entrée adaptable sur l'ouverture 14 du contenant 12 et un orifice 34 de sortie,
- un moyen 36 de retournement du moyen de réception 18, qui est destiné à permettre le retournement du contenant 12 et son vidage au travers de la trémie 30.

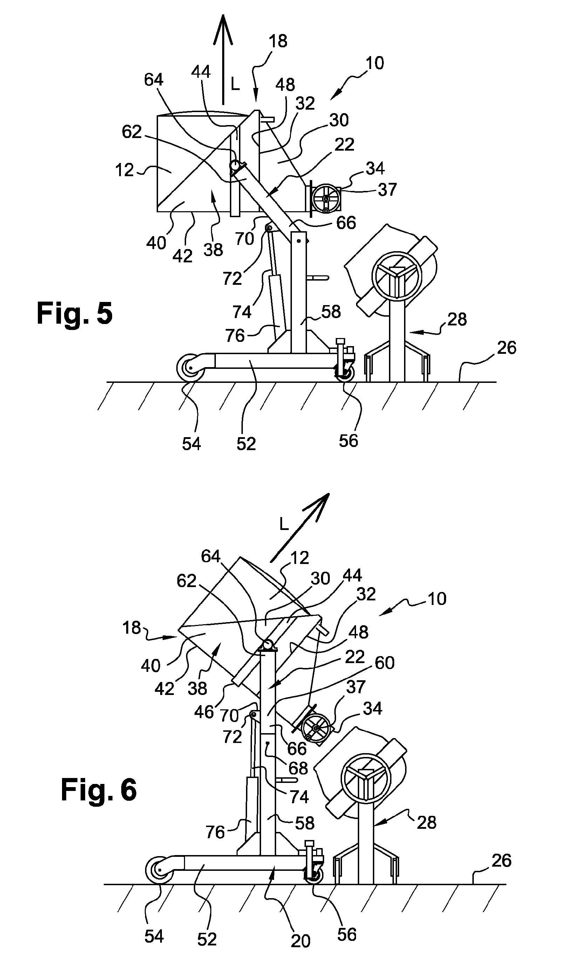

Ainsi, le dispositif 10 permet d'adapter la trémie 30 sur l'ouverture 14 du big-bag comme représenté aux figures 2, 4, 5 et 6 puis de retourner le moyen 18 de réception pour vider le big-bag 12 au travers de la trémie 30, comme représenté à la figure 6.

Avantageusement, la trémie 30 comporte une vanne 37 permettant d'interrompre l'écoulement du contenu du contenant 12 au travers de ladite trémie 30. Cette vanne permet par exemple de doser l'apport de contenant s'écoulant au travers de la trémie 30, ce qui peut par exemple être particulièrement utile dans la préparation d'une composition, par exemple dans la préparation du béton à l'aide d'une bétonnière 28 comme représenté à la figure 6.

On va à présent décrire plus particulièrement un mode de réalisation préféré de l'invention reposant sur les principes précédemment décrits, étant entendu que ce mode de réalisation est fourni à titre d'exemple et de manière non limitative de l'invention.

Dans ce mode de réalisation préféré de l'invention, le moyen 18 de réception du contenant comporte une hotte 38 ouverte selon la direction longitudinale "L", qui comporte deux joues planes 40 parallèles longitudinales qui sont reliées par une paroi transversale 42 de fond. Il sera compris que les joues 40 sont écartées transversalement d'une distance correspondant sensiblement à l'encombrement du contenant ou big-bag 12.

Les joues 40 sont destinées à être glissées de part et d'autre du contenant 12, comme représenté aux figures 2 et 4 puis à recevoir au moins un moyen de préhension solidaire du contenant, notamment des poignées transversalement opposées du big-bag 12.

De préférence, les joues planes 40 longitudinales et la paroi 42 transversale de la hotte 38 sont bordées par des poutres longitudinales 44 et une poutre transversale 46 de renfort correspondantes qui délimitent ainsi un cadre ouvert en forme de "U" qui rigidifie les joues 40 et la paroi 42 de manière que la hotte 38 forme un moyen 18 de réception résistant aux déformations transversales du big-bag 12 lorsqu'il est soulevé.

Par ailleurs, l'orifice d'entrée 32 de la trémie 30 coïncide avec des bords supérieurs 48 des joues planes 40 et un bord 50 de la paroi transversale 42 de la hotte 38, afin d'éviter toute perte du contenu du big-bag 12 lors de son retournement.

Le chariot 20 quand à lui comporte deux longerons longitudinaux 52 munis à leurs extrémités de roues 54, 56, qui sont reliés par au moins une traverse transversale 56 avec laquelle ils délimitent une portion de cadre ouvert en "U" qui est susceptible comme le moyen de réception 18 d'être glissé de part et d'autre d'un contenant 12.

A partir des longerons 52 s'étendent deux potences verticales 58 qui portent le moyen 18 de réception du contenant par l'intermédiaire du moyen de levage 22.

Plus particulièrement, comme l'illustrent les figures 1, 5 et 6, le moyen de levage 22 comporte deux bras 60 dont chacun comporte :
- une première extrémité 62 qui est montée pivotante par l'intermédiaire d'un premier pivot 64 à l'extrémité d'une potence 58 verticale associée,
- une seconde extrémité 66 qui est montée pivotante par l'intermédiaire d'un deuxième pivot 68 sur une partie intermédiaire de la poutre 44 longitudinale associée de renfort de la hotte 38,
- une partie intermédiaire 70 qui est accouplée par l'intermédiaire d'un troisième pivot 72 à l'extrémité d'une tige 74 d'un vérin 76 dont le corps est solidaire du chariot 18.

De la sorte, le moyen de levage permet la levée de la hotte 38 au bout des bras 60 par un simple actionnement des vérins 76, comme représenté aux figures 2 et 5. Les pivots 64 permettent de garantir l'horizontalité de la hotte 38 au cours de sa levée, et donc le maintien de l'ouverture 14 du big-bag 12 vers le haut, afin d'éviter que ne se réponde son contenu.

Dans le mode de réalisation préféré de l'invention, le moyen 38 de retournement du moyen 18 de réception comporte un moyen de blocage des premiers pivots 64 des bras 60 du moyen de levage 22 et des vérins 76 dudit moyen 22 de levage qui sont prévus pour que leur course permette un retournement à sensiblement 180° de la trémie. Le blocage des pivots 64 et la course angulaire des bras 60, déterminée par la course des vérins 76, permet le retournement de la trémie 30 à sensiblement 180°, comme représenté à la figure 6.

Plusieurs moyens peuvent être utilisés pour parvenir au blocage de ces premiers pivots 64.

Selon une première configuration simple, il est possible d'envisager que les pivots 64 ne soient libres que sur une partie de leur course de rotation. De la sorte, au-delà d'un angle déterminé de levée des bras 60, les pivots 64 se bloquent automatiquement et le moyen 18 de réception n'effectue plus un mouvement de translation circulaire parallèle au sol comme cela a été représenté aux figures 1 et 2, mais un mouvement de rotation comme représenté aux figures 5 et 6, qui conduit à terme à un retournement complet de la trémie 30 et par conséquent au vidage du big-bag 12 dans la trémie 30.

Selon une seconde configuration simple il est aussi possible d'envisager que les pivots 64 puissent être bloqués manuellement à la hauteur voulue, ce qui offre toute latitude de mouvement. Le retournement du moyen 18 de réception et de la trémie 30 peut ainsi être provoqué par la levée des bras 60 au-delà d'un angle déterminé ou par une action extérieure, notamment manuelle.

On remarquera avantageusement que les pivots 64 pourraient, en variante (non représentée) être motorisés pour commander le retournement à volonté du moyen de réception 18.

Enfin, on remarquera que, dans le mode de réalisation préféré de l'invention, les vérins 76 sont des vérins hydrauliques qui peuvent être actionnés par une pompe manuelle afin de garantir une mobilité complète du dispositif 10 sans aucun raccordement à une quelconque source de puissance.

L'invention propose donc un dispositif 10 de prise, de manutention et de vidage d'un big-bag de conception simple, robuste et efficace.

## Revendications

1. Dispositif (10) de prise, de manutention et de vidage d'un contenant souple (12) de matériau muni d'une ouverture supérieure, notamment un sac (12) de grande capacité dit "big-bag", qui comporte au moins :
- un moyen (18) de réception dudit contenant (12),
- un chariot (20), porteur dudit moyen (18) de réception,
- un moyen de levage (22), interposé entre ledit chariot (20) et ledit moyen (18) de réception, qui est notamment destiné à permettre le prélèvement du contenant (12) sur toute surface pour son transfert vers une position de transport sur le chariot (20),
le chariot (20) comportant :
- une trémie (30) comportant un orifice (32) d'entrée adaptable sur l'ouverture (14) du contenant (12) et un orifice (34) de sortie,
- un moyen (36) de retournement du moyen de réception (18), qui est destiné à permettre le retournement du contenant (12) et son vidage au travers de la trémie (30).
**caractérisé en ce que** la trémie (30) comporte une vanne (37) permettant d'interrompre l'écoulement du contenu du contenant au travers de ladite trémie (30).

2. Dispositif (10) selon l'une des revendications précédentes, **caractérisé en ce que** le moyen (18) de réception du contenant comporte une hotte (38) ouverte longitudinalement comportant deux joues (40) planes parallèles longitudinales qui sont reliées par une paroi (42) transversale de fond, qui sont écartées transversalement d'une distance correspondant sensiblement à l'encombrement du contenant (12), et qui sont destinées à être glissées de part et d'autre du contenant (12) puis à recevoir au moins un moyen de préhension solidaire du contenant (12), notamment des poignées transversalement opposées d'un big-bag (12).

3. Dispositif (10) selon la revendication précédente, **caractérisé en ce que** les joues planes (40) longitudinales et la paroi (42) transversale de la hotte sont bordées par des poutres longitudinales (44) et une poutre transversale (46) de renfort correspondantes.

4. Dispositif (10) selon l'une des revendications 2 ou 3, **caractérisé en ce que** l'orifice (32) d'entrée de la trémie (30) coïncide avec des bords supérieurs (48, 50) des joues planes et de la paroi transversale de la hotte.

5. Dispositif (10) selon l'une des revendications 2 à 4, **caractérisé en ce que** le chariot (20) comporte deux longerons (52) longitudinaux munis à leurs extrémités de roues (54, 56), qui sont reliés par au moins une traverse transversale (56) avec laquelle ils délimitent une portion de cadre ouvert en "U" susceptible d'être glissé de part et d'autre d'un contenant (12), et à partir desquels s'étendent deux potences verticales (58) qui portent le moyen (18) de réception du contenant par l'intermédiaire du moyen de levage (22).

6. Dispositif (10) selon la revendication précédente prise en combinaison avec la revendication 3, **caractérisé en ce que** le moyen de levage (22) comporte deux bras (60) dont chacun comporte :
- une première extrémité (62) qui est montée pivotante par l'intermédiaire d'un premier pivot (64) à l'extrémité d'une potence (58) verticale associée,
- une seconde extrémité (66) qui est montée pivotante par l'intermédiaire d'un deuxième pivot (68) sur une partie intermédiaire de la poutre (44) longitudinale associée de renfort de la hotte (38),
- une partie intermédiaire (70) qui est accouplée par l'intermédiaire d'un troisième pivot (72) à l'extrémité d'une tige (74) d'un vérin (76) dont le corps est solidaire du chariot (18).

7. Dispositif (10) selon la revendication précédente, **caractérisé en ce que** le moyen (38) de retournement du moyen de réception comporte un moyen de blocage (22) du premier pivot (64) des bras (60) du moyen de levage et des vérins (76) dudit moyen de levage dont la course permet le retournement de la trémie à sensiblement 180°.

8. Dispositif (10) selon l'une quelconque des revendications 6 ou 7, **caractérisé en ce que** les vérins (76) sont des vérins hydrauliques.
